# EUROPEAN PATENT APPLICATION

(11) **EP 0 611 526 A1**
(43) Date of publication of application: **24.08.1994**
(21) Application number: 93200344.5
(22) Date of filing: 09.02.1993
(51) Int. Cl.: A23D 9/00, A23G 1/00, A23G 9/02

(54) **Edible fat-containing products**

(71) Applicant: UNILEVER N.V., NL-3000 DK Rotterdam (NL)
(72) Inventor: Müller, Volkmar Konrad, 3133 AT Vlaardingen (NL)
(74) Representative: Joppe, Hermina L. P.

(57) **Abstract**

A polyol fatty acid polyester or a mixture of polyol fatty acid polyesters comprising at least two different fatty acid residues and wherein the two most abundant fatty acid residues constitute at least 50 wt% of the fatty acid residues of the polyol fatty acid polyester, the most abundant fatty acid residue being selected from the group of:
myristic acid,
palmitic acid,
stearic acid,
arachidic acid, and
the second most abundant fatty acid residue being selected from the group of:
capric acid and
lauric acid,
and the weight ratio between the most abundant fatty acid residue and the second most abundant fatty acid residue being from 90 : 10 to 65 : 35.

## Description

The present invention relates to edible fat-containing products comprising an indigestible fat-replacer.

In this specification, unless otherwise indicated, the term 'fat' refers to edible fatty substances in a general sense, including natural or synthesized fats and oils consisting essentially of triglycerides such as, for example, soybean oil, sunflower oil, palm oil, coconut oil, fish oil, lard and tallow, which may have been partially or completely hydrogenated or modified otherwise, as well as non-toxic fatty materials having properties similar to triglycerides, herein referred to as fat-replacers, which materials may be partially or fully indigestible. The terms fat and oil are used interchangeably.

Over the last decade many non-triglyceride fatty substances have been described as potential fat-replacers in food products. Examples thereof are waxes, e.g. jojoba oil and hydrogenated jojoba oil, polysiloxanes, acylated glycerides, polyalkoxyglycerolethers, dicarboxylic acid esters, polyol fatty acid polyesters and the epoxy extended derivatives thereof. Examples of disclosures of fatreplacers are e.g. DD 207 070, Journal of Food Science 49 419-428 (1984), US 3,600,186, US 4,005,195, US 4,005,196, US 4,034,083, US 4,582,715, US 4,582,927, EP 0 233 856, EP 0 236 288, EP 0 235 836 and EP 0 254 547.

In particular polyol fatty acid polyesters, and more specifically the sugar fatty acid polyesters, such as e.g. the sucrose fatty acid polyesters, are receiving increased attention as low-calorie fat-replacers in edible products.

Substantially indigestible for human beings they have physical and organoleptic properties very similar to triglyceride oils and fats conventionally used in edible products.

Polyol fatty acid polyesters are also reported to have use as pharmaceutical agents e.g. in view of their ability to take up fat-soluble substances, such as in particular cholesterol, in the gastrointestinal tract, and subsequently remove those substances from the human body.

Suitable polyol fatty acid polyesters are derived from aliphatic or aromatic polyols which comprise at least four free hydroxyl groups. Such polyols in particular include the group of sugar polyols, which comprises the sugars, i.e. the mono-, di- and polysaccharides, the corresponding sugar alcohols and the derivatives thereof having at least four free hydroxyl groups. Examples of sugar polyols include glucose, mannose, galactose, xylose, fructose, sorbose, tagatose, ribulose, xylulose, maltose, lactose, cellobiose, raffinose, sucrose, erythritol, mannitol, lactitol, sorbitol, xylitol and alpha-methylglucoside. A particularly preferred polyol is sucrose.

The term 'polyol fatty acid polyester' is intended to refer to any such polyesters or mixtures thereof which have a degree of conversion of 70 % or more, i.e. of which, on an average, 70 % or more of the polyol hydroxyl groups have been esterified with fatty acids. Preferred polyol fatty acid polyesters for use in the present invention have degrees of conversion of 85 % or more, or even 95 % or more.

A problem with conventional polyol fatty acid esters is that the mouthfeel, crystallisation and melting properties are often not optimal. This problem is especially apparent in polyol fatty acids which are intended to be used in edible coatings for e.g. for ice-cream or ice-cream wafers.

Confectionery coatings suitable for ice-cream or ice-cream wafers preferably are solid and crisp but not brittle at freezer temperature and during the period after removal from the freezer until consumption, and at the same time fluid and soft in the mouth (for ice-cream products the mouth temperature is about 20 °C). For combining these two desired properties a steep melting profile between 15 °C and 25 °C, especially around between 15 °C and 20 °C is important.

US 4,810,516 (P&G) describes reduced calorie chocolate confection compositions comprising polyol fatty acid polyesters having a clear melting point of 30-36 °C and an SCI of at least 66 at a temperature of 6.6 °C below its clear melting point. This document also discloses a sugar fatty acid polyester wherein the fatty acid groups are myristate and laurate in a mole ratio of about 5 : 3, said material having a clear melting point of about 34 °C and an SCI at 27 °C of about 79.

US 4,560,563 relates to fat based coatings for ice-cream products having a solid content at -20°C of 70-93%, at -10°C of 65-93%, at 0°C of 55-90%, at 20°C of 15-40, at 30°C of 0-12% and at 40°C of 0%.

A problem with the polyol fatty acid polyesters of the above documents is that often they do not have the desired melting properties. Another problem with the polyol fatty acid polyesters as disclosed in these documents is that they often tend to undergo further crystallisation after preparation, such that although the solid fat content at certain temperatures is relatively low, this value increases in time providing an undesired waxiness and unsatisfactory mouthfeel to the product. Furthermore sometimes the polyol fatty acidpolyesters do not rapidly cool or crystallize under cooling.

Melting properties of fatty substance can suitably be determined by measuring the N-line of the material. The N-line is the graph of Nt-values versus the temperature t. The Nₜ-value is conveniently measured by the nuclear magnetic relaxation technique and is a direct measure of the level of solid fat content at temperature t. This method is suitably described in Fette, Seifen, Anstrichmittel 80(5), 180-186 (1978). To some extent the measurement of Nₜ-values is dependent on the temperature profile used to prepare the samples for the NMR measurement. For the purposes of the present invention the following preparatory temperature profile is adopted: 30 minutes at 60°C, 90 minutes at 0°C, 40 hours at 26°C, again 90 minutes at 0°C and finally 60 minutes at the temperature of the measurement, after which the NMR-measurement is carried out.

It is an object of the present invention to provide polyol fatty acid polyesters with a tailored melting behaviour and/or with a reduced tendency to post-crystallise upon storage.

Surprisingly it has been found that advantageous polyol fatty acid polyesters contain relatively high levels of two fatty acids in specific ratios.

Accordingly the present invention relates to a polyol fatty acid polyester, or a mixture of polyol fatty acid polyesters comprising at least two different fatty acid residues and wherein the two most abundant fatty acid residues constitute at least 50 wt% of the fatty acid residues of the polyol fatty acid polyester, the most abundant fatty acid residue being selected from the group of:
capric acid and
lauric acid; and
the second most abundant fatty acid residue being selected from the group of: myristic acid,
palmitic acid,
stearic acid, and
arachidic acid;
and the weight ratio between the most abundant fatty acid residue and the second most abundant fatty acid residue being from 95 : 5 to 65 : 35.

Also the invention relates to food products comprising from 1-100% by weight of these polyol fatty acid polyesters.

For the purpose of the present invention the most abundant fatty acid residue in the polyol fatty acid polyester(s) is the fatty acid residue which is present at the highest weight percentage based on the total weight of the fatty acid residues. The second most abundant fatty acid residue in the polyol fatty acid polyester is the fatty acid residue which is present at the one but highest weight percentage, based on the total weight of the fatty acid residues.

Polyol fatty acid esters of the invention may be prepared by any suitable method for the preparation thereof. Suitable methods are for example disclosed in EP 132,941, EP 132,293, US 3,963,699, EP 256,585, EP 301,634, EP 319,091 and EP 322,971. A particular preferred process is described in and involves the steps as disclosed in EP 256,585.

Preferably the octa-ester content of polyol fatty acid esters in accordance with the invention is more than 80%, more preferred more than 85%, most preferred more than 90%. Preferably the polyol fatty acid ester is a sucrose fatty acid polyester.

Although applicants do by no means want to be bound by this theory, it is believed that the improved melting properties and/or crystallisation properites of polyol fatty acid polyesters are due to the specific division of fatty acid residues over the polyol fatty acid ester molecules. In particular it is believed that if the two most abundant fatty acid residues are present at a fairly high total level, while there is a specific ratio between the most abundant fatty acid residue and the second most abundant fatty acid residue, then the resulting polyol fatty acid polyesters have an intermediate degree of complexity, which results in an adequately short and relatively sharp melting profile and/or which does not give rise to an unacceptable degree of post-crystallisation. Furthermore it is believed that the specific choice of fatty acid residues as indicated above provides polyol fatty acid residues, which surprisingly have a melting behaviour which renders them especially suitable for use in coatings, especially coatings for frozen confectionary products e.g. icre-cream or ice-cream wafers.

Preferably the total level of the two most abundant fatty acid residues in the polyol fatty acid polyester is more than 60 wt% based on the total weight of the fatty acid residues, more preferred from 70 to 100 wt%, most preferred from 80 to 100%. Especially preferred are polyol fatty acid polyesters which are substantially free from fatty acid residues other than the two most abundant fatty acid residues.

The weight ratio of the most abundant fatty acid residue to the second most abundant fatty acid residue is from 95 : 5 to 65 : 35 more preferred 93 : 7 to 75 : 25, most preferred 92 12 to 85 : 15.

Preferably the most abundant fatty acid residue is lauric acid.

Preferably the second most abundant fatty acid residue is myristic acid.

A particularly preferred polyol fatty acid polyester in accordance to the invention contains lauric acid and myristic acid in a weight ratio of 95 : 5 to 65 : 35, the total level of myristic acid and lauric acid being more than 60 wt%, more preferred 70-100 wt%, most preferred 80-100 wt%, based on the total weight of the fatty acid residues.

Food compositions in accordance to the invention comprise polyol fatty acid polyesters as part or all of the fatty substances. Apart from polyol fatty acid polyesters as defined herein, food compositions of the invention may comprise digestible fatty substances such as triglyceride materials and non-glyceride fatty substances.

Accordingly to a second embodiment of the invention there is provided a food composition comprising from 1 -100 wt % of fatty substances, wherein from 50 - 100 % of the fatty substances are polyol fatty acid polyester as defined here above.

The level of these fatty substances other than the polyol fatty acid polyesters may be up to 50 wt%, based on the total weight of the fatty substances, preferably, however the level is from 0-40 wt%, more preferred 0-30 wt%, most preferred food compositions of the invention are substantially free from fatty substances other than polyol fatty acid polyesters. For some applications it may however be advantageous to add from 0.5 - 35 % based on the total weight of softening oils or cocoa butter, e.g. digestible softening oils.

Depending on the type of food composition, the total level of fatty substances in the edible composition of the invention may be from 1-100 wt%, for example 5-95 wt%. Some edible compositions like shortenings, chocolate and dressings may comprise relatively high levels of fatty substances, for example 30-90 wt%. Other edible compositions like sauces, soups, bakery products etc may comprise lower levels of fatty substances for example 1-30 wt%.

In any case, the fatty substances which are present in the food compositions of the invention comprise a polyol fatty acid polyester material as defined hereabove, the level thereof preferably being from 60-100 wt%, more preferred 70-97 wt%, most preferred 80-95 wt% based on the total weight of fatty substances in the food product.

The optional conventional fat-component other than polyol fatty acid polyester may be triglyceride oils or fats of animal or vegetable origin. Suitable conventional triglyceride fats and oils include, optionally partially or fully hydrogenated, coconut oil, palmkernel oil, palm oil, marine oils, lard, tallow fat, butter fat, cocoa butter fat, soybean oil, safflower oil, cotton seed oil, rapeseed oil, corn oil sunflower oil and mixtures thereof. For use in chocolate confectionery products cocoa butter is a prefered digestible fat component.

Particularly preferred however is the use of the polyol fatty acid polyesters in accordance to the invention in fatty coatings, e.g. chocolate coatings, e.g. suitable for ice-cream or ice-cream wafers. Suitable coatings preferably comprise from 25-75% by weight of fatty substances, 0.001 to 60% by weight of sugar or other sweeteners such as for example aspartame, 5-35% by weight of cocoa powder or chocolate liquor and 0-40% of milk solids, 0-5% flavouring and/or colouring materials, 0-5% lecithin or other emulsifying agent, the balance being other suitable materials, e.g. carbohydrate or other bulking agents.

In another preferred embodiment of the invention the coating material of the invention comprises fatty substances having an N-value at 15 °C of at least 60, more preferred 70-100, most preferred 80-95 and an N-value at 20 °C of less than 15, more preferred from 0-8, most preferred from 0-3°C. Preferably at least 50% by weight of these fatty substances are polyol fatty acid polyester materials according to the invention, more preferred 70-100%, most preferred 90-100%.

Preferably the above mentioned N-values can be observed, both directly after preparation and after storage for say 1 month at ambient temperature.

Chocolate coatings of the invention can be made by conventional techniques, such as for example described in US 4,810,516.

The invention will be further illustrated by means of the following examples:

### Example I

A sucrose fatty acid polyester was obtained from a mixture of myristic acid and lauric acid which is converted to the respective methyl esters and then reacted with sucrose in the presence of a potassium carbonate catalyst.

The resulting product contained 89.1% Lauric acid, 103% myristic acid, 0.6 trace fatty acids. The OH value was 5.1.

The N-values of the obtained sucrose polyesters were measured as described hereinabove at various temperatures. The following results was obtained:

A chocolate coating for ice-cream or ice-cream wafers may be prepared from this material to the following compostitions:

| ingredient | A wt % | B wt % | C wt % |
|---|---|---|---|
| polyol fatty acid polyester | 32 % | 55 % | 48 % |
| sugar | 49.6 % | 29 % | 29 % |
| cocoa powder | 18 % | 15.7 % | 12.6 % |
| lecithin | 0.4 % | 0.3 % | 0.4 % |
| milk solids non fat | - | - | 10 % |

The ingredients can be mixed at 50°C followed by milling at 25°C using a triple roller mill, conching for 5 hours at 50°C in an end-runner.

## Claims

1. A polyol fatty acid polyester or mixture of polyol fatty acid polyesters comprising at least two different fatty acid residues and wherein the two most abundant fatty acid residues constitute at least 50 wt% of the fatty acid residues of the polyol fatty acid polyester(s), the most abundant fatty acid residue being selected from the group of:
capric acid;
lauric acid,
and the second most abundant fatty acid residue being selected from the group of:
myristic acid
palmitic acid,
stearic acid, and
arachidic acid
and the weight ratio between the most abundant fatty acid residue and the second most abundant fatty acid residue being from 95 : 5 and 65 : 35

2. A material according to claim 1, wherein the level of the two most abundant fatty acid residues is more than 60 wt %, more preferred preferred from 70 - 100 wt %, most preferred from 80 - 100 % of the fatty acid residues of the polyol fatty acid polyester(s).

3. A material according to claim 1 wherein the most abundant fatty acid residue is lauric acid and the second most abundant fatty acid residue is myristic acid.

4. Food composition comprising from 1-100 wt % of fatty substances, wherein from 50-100 wt % of the fatty substances are polyol fatty acid polyesters in accordance to claim 1.

5. Food composition according to claim 4 being an edible coating.

6. Food compositions according to claim 5 wherein the fatty substances have a N-value at 15 °C of at least 60 and an N-value at 20 °C of less than 15.

7. Food composition according to claim 5 comprising
a) 25-75 wt% of fatty substances;
b) 0.001-60 wt% of sugar or other sweeteners;
c) 5-35 wt% of cocoa powder or chocolate liquor;
d) 0-40 wt% of milk solids;
e) 0-5 wt% of flavouring and/or colouring materials;
f) 0-5 wt% of emulsifying agents.

8. Composite frozen confectionary product comprising an ice-cream or ice-wafer in contact with a food composition in accordance to one or more of claims 4-7.
